# FASCICULE DE BREVET EUROPEEN

(11) **EP 3 970 578 B1**
(45) Date de publication et mention de la délivrance du brevet: **02.08.2023**
(21) Numéro de dépôt: 21195657.8
(22) Date de dépôt: 09.09.2021
(51) Int. Cl.: A47J 31/44, A47J 31/58

(54) **MACHINE À CAFÉ MUNIE D'UN DISPOSITIF DE SECURITÉ À L'OUVERTURE D'UN COUVERCLE DE BAC À GRAINS DE CAFÉ**
KAFFEEMASCHINE MIT EINER SICHERHEITSVORRICHTUNG ZUM ÖFFNEN DES DECKELS DES KAFFEEBOHNENBEHÄLTERS
COFFEE MACHINE EQUIPPED WITH A SAFETY DEVICE ON THE OPENING OF A LID OF A COFFEE BEAN TRAY

(30) Priorité: 17.09.2020 FR 2009440
(43) Date de publication de la demande: 23.03.2022
(73) Titulaire: SEB S.A., 69130 Ecully (FR)
(72) Inventeur: LAMBALLE, Alexandre, 53100 MAYENNE (FR); BICHET, Fabrice, 53100 MAYENNE (FR); DUTOYA, Laurence, 53500 MONTENAY (FR)
(74) Mandataire: SEB Développement

(56) Documents cités:
- EP-A1- 1 688 046
- WO-A2-2014/162236
- DE-A1-102010 007 376
- DE-U1-202016 102 789
- FR-A1- 2 901 114
- JP-A- S63 270 013

## Description

La présente invention se rapporte au domaine technique général des machines à café automatiques comportant un bac à grains de café alimentant un broyeur muni de meules, plus particulièrement une machine à café automatique comportant un bac à grains de café muni d'un couvercle amovible.

Il est connu du document FR2901114 une machine à café automatique comportant un bac de mouture de café alimentant une chambre d'infusion. Le bac comporte une ouverture supérieure recouverte par un couvercle amovible pour interdire l'accès à des pales motorisées de distribution de la mouture. La machine à café comporte un dispositif de sécurité de présence du couvercle sur l'ouverture supérieure qui comprend une tige de sécurité qui s'étend depuis un bord du couvercle et un interrupteur muni d'un poussoir mobile entre une position activée dans laquelle le couvercle est présent sur le bac et la tige de sécurité agit sur le poussoir et l'interrupteur qui autorise le fonctionnement des pales motorisées et une position désactivée dans laquelle le couvercle est retiré du bac et l'interrupteur interdit le fonctionnement des pales motorisées. La tige de sécurité comporte un organe d'appui qui coopère avec une surface d'appui du poussoir dans la position activée. Pour retirer le couvercle, l'utilisateur doit faire pivoter le couvercle autour d'un axe vertical, puis le soulever.

Ainsi, un tel dispositif ne fonctionne que pour un couvercle circulaire, avec une tige de sécurité qui s'étend dans un plan du couvercle. De plus, le mode opératoire pour retirer le couvercle est compliqué. En effet, l'utilisateur doit faire pivoter le couvercle autour d'un axe vertical, puis le soulever.

Le but de la présente invention est de remédier aux inconvénients précités et de proposer une machine à café automatique qui présente une mise en oeuvre simple et ergonomique, tout en garantissant la sécurité de l'utilisateur.

Un autre but de la présente invention est de proposer une machine à café automatique qui présente une conception simple et qui soit économique à mettre en oeuvre.

Ces buts sont atteints avec une machine à café automatique comportant un bac à grains de café alimentant un broyeur, ledit bac comportant une ouverture supérieure recouverte par un couvercle amovible, ladite machine à café comportant un dispositif de sécurité de présence du couvercle sur l'ouverture supérieure qui comprend une tige de sécurité qui s'étend depuis un bord du couvercle et un interrupteur muni d'un poussoir mobile entre une position activée dans laquelle le couvercle est présent sur le bac et la tige de sécurité agit sur le poussoir et l'interrupteur qui autorise le fonctionnement du broyeur, et une position désactivée dans laquelle le couvercle est retiré du bac et l'interrupteur interdit le fonctionnement du broyeur, la tige de sécurité comportant un organe d'appui qui coopère avec une surface d'appui du poussoir dans la position activée, caractérisée en ce que la tige de sécurité s'étend transversalement à un plan P dans lequel s'inscrit le couvercle et en ce que le couvercle est mobile sur le bac en rotation autour d'un axe Δ tangent au bord du couvercle et passant par une zone de jonction de la tige de sécurité et le plan P, l'organe d'appui de la tige de sécurité étant dimensionné pour se désaccoupler de la surface d'appui du poussoir lorsque le couvercle posé sur le bac pivote autour de l'axe Δ d'une valeur angulaire supérieure à 20° et ainsi faire passer le poussoir dans la position désactivée.

On comprend que le couvercle muni de la tige de sécurité est posé sur l'ouverture sans point de fixation pour permettre une évacuation directe du couvercle vers le haut. Cependant, une telle conception autorise une utilisation anormale dans laquelle l'utilisateur peut faire pivoter le couvercle autour de l'axe Δ. Ainsi, le dispositif de sécurité est dimensionné pour ne pas autoriser le fonctionnement du broyeur au-delà d'un pivotement du couvercle autour de l'axe Δ suffisant pour libérer un passage permettant l'accès des meules aux doigts de l'utilisateur. En conséquence, même si l'utilisateur enlève le couvercle avec ce mode opératoire en deux temps : une rotation du couvercle puis un déplacement vers le haut, il le fait en toute sécurité.

La tige de sécurité qui s'étend transversalement à un plan P dans lequel s'inscrit le couvercle permet d'intégrer le poussoir dans la machine à café automatique et ainsi le rendre inaccessible à l'utilisateur.

De manière avantageuse, la tige de sécurité coopère avec un logement muni d'un orifice aménagé dans une paroi supérieure de la machine à café automatique.

Avantageusement, le couvercle et l'ouverture présentent une forme rectangulaire, l'axe Δ s'étendant le long d'un grand côté de la forme rectangulaire.

De manière avantageuse, l'axe Δ s'étend le long du bord formé par un grand côté de la forme rectangulaire.

De préférence, la tige de sécurité s'étend perpendiculairement au couvercle, sur un bord orienté vers l'utilisateur.

Par orienté vers l'utilisateur, on comprend que la tige de sécurité est agencée au plus près de l'utilisateur de manière à être visible par l'utilisateur.

Ainsi, la mise en place du couvercle sur la machine à café automatique est facilitée, notamment l'insertion de la tige de sécurité dans le logement agencée dans la paroi supérieure.

Avantageusement, le poussoir est mobile en translation parallèlement à l'axe Δ.

Ainsi, le poussoir s'étend très peu vers l'intérieur de la machine à café automatique pour faciliter l'implantation des autres composants.

De préférence, la machine à café automatique comporte une paroi supérieure au sein de laquelle est agencée une ouverture destinée à recevoir la tige de sécurité et l'axe Δ est horizontal.

De manière avantageuse, le couvercle est agencé au niveau de la paroi supérieure, dans l'ouverture. Ainsi, le couvercle peut être intégré sans dépasser au-dessus de la paroi supérieure.

De préférence, l'organe d'appui est formé par une paroi verticale de forme rectangulaire, agencée de manière perpendiculaire à l'axe Δ et la surface d'appui présente une forme de trapèze.

Avantageusement, le dispositif de sécurité comporte un moyen de rappel du poussoir dans la position désactivée.

Ainsi, le retour en position désactivée de sécurité est automatique.

De préférence, le couvercle comporte une zone de préhension agencée à proximité de la tige de sécurité.

Ainsi, pour ôter le couvercle, l'utilisateur est incité à saisir le couvercle par la zone de préhension et à soulever le couvercle muni de la tige de sécurité vers le haut, sans tenter de le faire pivoter autour de l'axe Δ.

Avantageusement, le broyeur comporte une meule fixe et une meule mobile en rotation, le bac à grains de café comportant un conduit d'accès aux meules fixe et mobile démuni d'obstacles.

Le dispositif de sécurité de présence du couvercle sur l'ouverture supérieure permet de ne pas avoir à sécuriser avec des obstacles l'accès aux meules par les doigts de l'utilisateur. Ainsi, les grains de café ne risquent pas de se coincer à l'entrée du broyeur, au-dessus du conduit d'accès aux meules fixe et mobile.

De préférence, la machine à café automatique comporte un système de commande relié à l'interrupteur pour autoriser ou interdire le fonctionnement du broyeur.

L'invention sera mieux comprise à l'étude du mode de réalisation pris à titre nullement limitatif et illustré dans les figures annexées dans lesquelles :
[Fig. 1] La figure 1 illustre une vue en perspective d'une machine à café automatique comportant un dispositif de sécurité de présence d'un couvercle sur une ouverture supérieure d'un bac à grains de café selon un mode particulier de réalisation de l'invention.
[Fig. 2] La figure 2 illustre une vue du dessous, en coupe selon une ligne II-II du bac à grains de café, du broyeur, du couvercle et du dispositif de sécurité de présence du couvercle de la machine à café automatique illustrée sur la figure 1, le couvercle étant pivoté et le poussoir en position désactivée.
[Fig. 3] La figure 3 illustre une vue du dessus selon une direction III, en perspective écorchée du dispositif de sécurité de présence du couvercle de la machine à café automatique illustrée sur la figure 2, le couvercle étant retiré.
[Fig. 4] La figure 4 illustre une vue du dessus selon une direction III, en perspective écorchée du dispositif de sécurité de présence du couvercle de la machine à café automatique illustrée sur la figure 2, le couvercle étant posé sur l'ouverture et le poussoir en position activée.
[Fig. 5] La figure 5 illustre une vue du dessus selon une direction III, en perspective écorchée du dispositif de sécurité de présence du couvercle de la machine à café automatique illustrée sur la figure 2, le couvercle étant pivoté et le poussoir en position désactivée.

On notera que, dans ce document, les termes «horizontal», «vertical», «inférieur», «supérieur», «longitudinal», «transversal», «haut», «bas», employés pour décrire la machine à café automatique font référence à cette machine reposant sur un plan de travail, en situation d'usage.

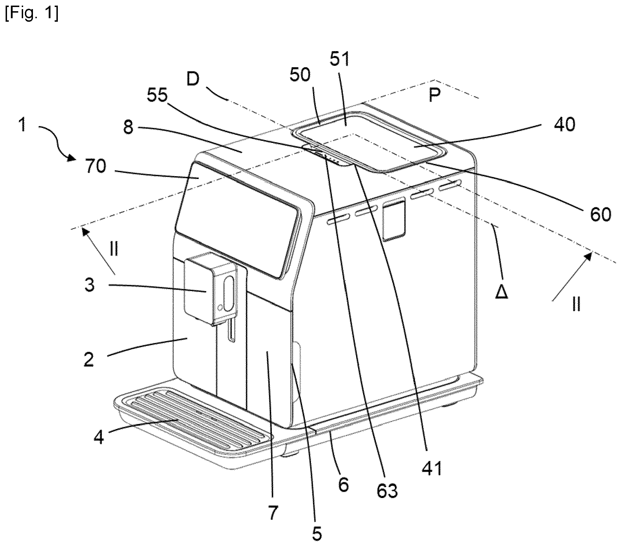

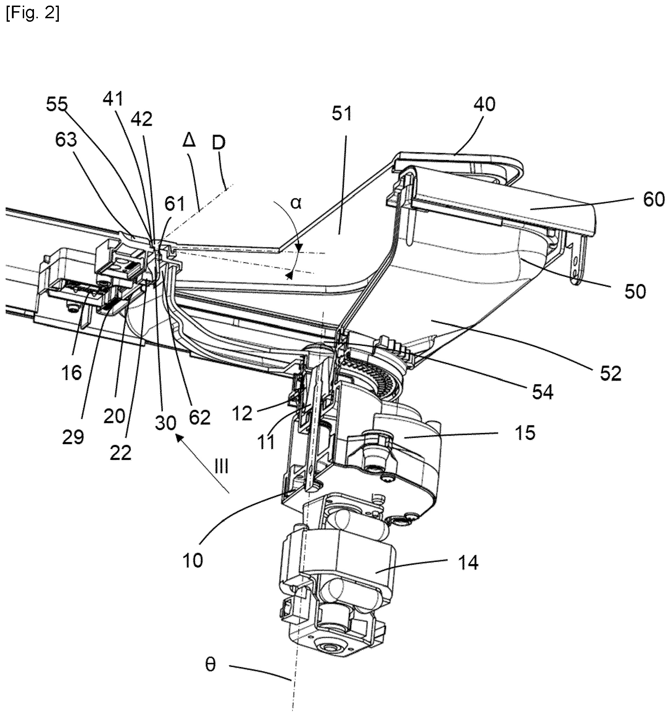

Dans l'exemple de réalisation représenté aux figures 1 à 2, une machine à café automatique 1 comporte un bâti 5 muni d'une base 6 destinée à reposer sur un plan de travail. La machine à café automatique 1 comporte un réservoir 2 formant une alimentation en eau froide, un dispositif d'infusion muni d'une chambre d'infusion (non représentés sur les figures) alimentée en mouture de café par un broyeur 10 à grains de café (Fig.2). La machine à café automatique 1 comporte un piston presseur (non représenté sur les figures) comprimant la mouture dans la chambre d'infusion pour former une galette de mouture évacuée dans un bac à galettes 7. La machine à café automatique 1 comporte une tête de distribution 3 du café (Fig.1) qui comprend des sorties de café reliées à la chambre d'infusion et agencée au-dessus d'un repose-tasse 4. La tête de distribution 3 est montée mobile en translation verticale pour permettre à un utilisateur d'ajuster la position des sorties de café à la hauteur de la tasse. La machine à café automatique 1 comporte un bac 50 à grains de café agencé au-dessus du broyeur 10. Le bac 50 à grains de café comporte une ouverture 51 supérieure de chargement des grains de café. L'ouverture 51 est agencée au niveau d'une paroi supérieure 8 du bâti 2. L'ouverture 51 supérieure est recouverte par un couvercle 40 amovible.

Tel que visible à la figure 2, le broyeur 10 comprend une meule mobile 11 et une meule fixe 12. La meule mobile 11 est entraînée en rotation selon un axe θ au moyen d'un moteur 14 et d'un système de transmission 15 de type pignon et roue dentée. Cette rotation de la meule mobile 11 par rapport à la meule fixe 12 permet le broyage des grains de café.

Le bac 50 à grains de café comporte un fond 52 en forme d'entonnoir qui se termine par un conduit 54 d'accès aux meules fixe 12 et mobile 11. Pour faciliter la descente des grains de café vers les meules fixe 12 et mobile 11, le conduit 54 est libre de tout obstacle et une fois le couvercle 40 ôté, l'accès aux meules fixe 12 et mobile 11 est facilité.

La paroi supérieure 8 de la machine à café automatique 1 comporte dans une partie arrière au sein de laquelle est agencée un cadre 60 de réception du couvercle 40. Le couvercle 40 est intégré dans la paroi supérieure 8. Le couvercle 40 et la paroi supérieure 8 passent par un plan P horizontal (Fig.1). Le couvercle 40 et l'ouverture 51 présentent une forme rectangulaire. Le bac 50 à grains de café est agencé sous le cadre 60. Le cadre 60 est ajusté à l'ouverture 51 du bac 50 à grains de café. Le couvercle 40 est posé sur le cadre 60 et peut être retiré complètement pour faciliter le chargement en grains de café du bac 50. Le retrait complet du couvercle 40 permet également de positionner la machine à café automatique 1 dans une cuisine intégrée avec une hauteur limitée au-dessus du plan de travail qui n'autoriserait pas l'ouverture complète d'un couvercle articulé en rotation.

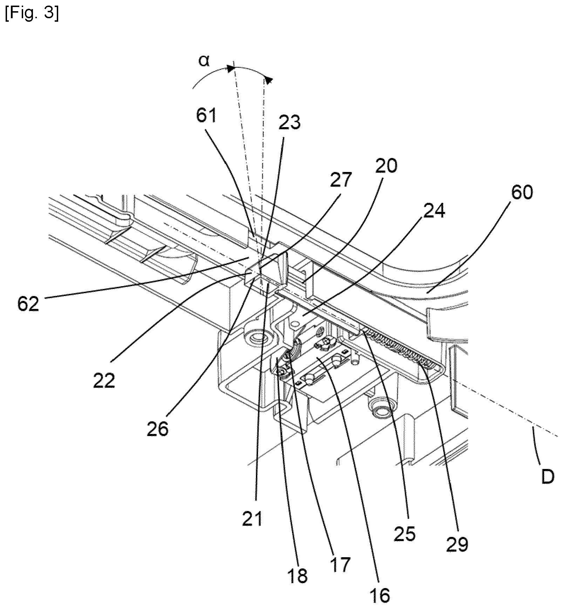

Conformément aux figures 2 à 5, la machine à café automatique 1 comporte un dispositif de sécurité de présence du couvercle 40 sur l'ouverture 51 du bac 50 à grains de café. Le dispositif de sécurité comprend une tige de sécurité 30 qui s'étend depuis un bord 41 (Fig.2) du couvercle 40 et un interrupteur 16 muni d'un poussoir 20 mobile agencé sous le cadre 60 et la paroi supérieure 8. Le cadre 60 comporte un orifice 61 (Fig. 2 et 3) par lequel la tige de sécurité 30 peut être retirée ou insérée pour coopérer avec le poussoir 30. Un logement 62 est ménagé sous le cadre 60 pour permettre l'introduction de la tige de sécurité 30. Le poussoir 20 est mobile entre une position activée dans laquelle le couvercle 40 est posé sur le bac 50 et la tige de sécurité 30 agit sur le poussoir 20 pour fermer l'interrupteur 16 et une position désactivée dans laquelle le couvercle 40 est retiré du bac 50 et la tige de sécurité 30 libère le poussoir 20 pour ouvrir l'interrupteur 16.

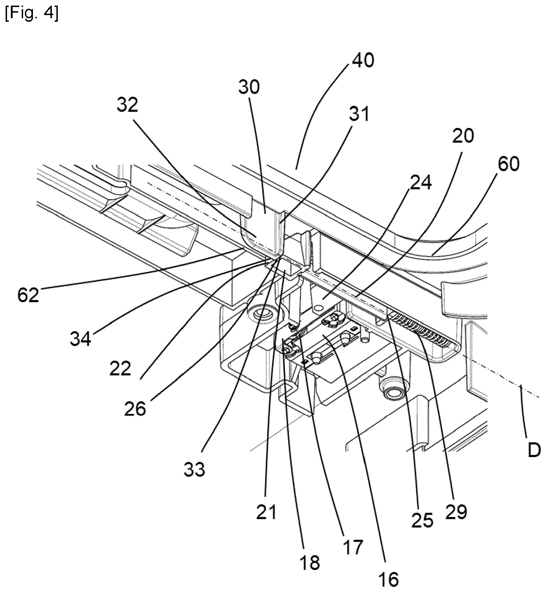

La tige de sécurité 30 s'étend perpendiculairement au couvercle 40 (Fig.4) vers le bas. La tige de sécurité 30 s'étend à partir du bord 41 formé par un grand côté de la forme rectangulaire qui est le plus proche de l'utilisateur. Le bord 41 s'étend selon une direction D. La tige de sécurité 30 comporte une paroi verticale 31 de forme rectangulaire qui s'étend transversalement à la direction D et une nervure 32 adossée à la paroi verticale 31 qui s'étend le long du bord 41, le long de la direction D. La paroi verticale forme un organe d'appui 31 de la tige de sécurité 30. La paroi verticale 31 comporte un bord inférieur 33.

Le poussoir 20 est agencé de manière coulissante sous le cadre 60. Le poussoir 20 s'étend le long de la direction D. le poussoir 20 comporte une première extrémité 21 libre qui comprend une surface d'appui 22 qui s'étend transversalement à la direction D de manière verticale. La surface d'appui 22 se prolonge vers le haut par une surface inclinée 23 (Fig. 3). L'interrupteur 16 est agencé à côté du poussoir 20, sous le cadre 60. L'interrupteur 16 comporte un bouton 17 marche/arrêt qui est manoeuvré par un levier 18. Le poussoir 20 comporte un bras latéral 24 qui s'étend transversalement à la direction D sous le cadre 60. Le bras latéral 24 appuie sur le levier 18 dans la position activée pour amener le bouton 17 en position marche et le bras latéral 24 libère le levier 18 dans la position désactivée pour amener le bouton 17 en position arrêt. Le dispositif de sécurité comporte un moyen de rappel du poussoir 20 dans la position désactivée formé par un ressort 29. Le poussoir 20 comporte une deuxième extrémité 25 sur laquelle agit le ressort 29.

Tel que visible sur la figure 4, l'organe d'appui de la tige de sécurité formé par la paroi verticale 31 coopère avec la surface d'appui 22 du poussoir 20 dans la position activée lorsque le couvercle 40 repose sur le cadre 60 et ferme l'ouverture 51 du bac 50 à grains de café. Le bord inférieur 33 de la paroi verticale 31 est destiné à coopérer avec la surface inclinée 23 du poussoir 20 lors du passage du poussoir 20 de la position désactivée à la position activée ou réciproquement.

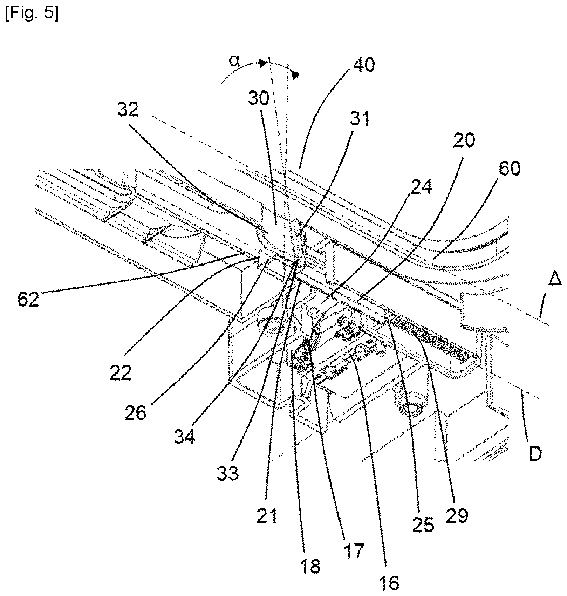

Tel que visible sur les figures 2 et 5, le couvercle 40 est mobile sur le bac 50 en rotation, notamment sur le cadre 60 autour d'un axe Δ tangent au bord 41 du couvercle. L'axe Δ s'étend parallèlement à la direction D et passe par une zone de jonction 42 (Fig. 2) de la tige de sécurité 30 avec le couvercle 40. L'organe d'appui de la tige de sécurité 30 formé par la paroi verticale 31 est dimensionné pour échapper à la surface d'appui 22 du poussoir 20 lorsque le couvercle 40, posé sur le cadre 60 coiffant le bac 50, pivote autour de l'axe Δ d'une valeur angulaire α supérieure à 20°. Ainsi, le poussoir 20 passe dans la position désactivée. La surface d'appui formé par la paroi verticale 31 comporte un bord latéral 34 qui est vertical lorsque le couvercle 40 est posé à plat sur le cadre 60 et qui s'incline au fur et à mesure que le couvercle 40 pivote autour de l'axe Δ. La surface d'appui 22 du poussoir 20 présente une forme trapézoïdale (Fig.3) comportant une grande base 26 agencée vers le bas et un côté incliné 27 d'une valeur angulaire α égale à 20° par rapport à une direction verticale. Le côté incliné 27 est aligné avec le bord latéral 34 de la paroi verticale 31 de la tige de sécurité 30 lorsque le couvercle 40 est pivoté d'un angle d'une valeur supérieure ou égale à 20°. Ainsi la paroi verticale 31 est décalée par rapport à la surface d'appui 22 et le ressort 29 fait passer le poussoir 20 de la position activée à la position désactivée.

Tel que visible aux figures 1 et 2, le couvercle 40 comporte une zone de préhension 55 agencée à proximité de la tige de sécurité 30, le long du bord 41. Le cadre 60 comporte une cavité 63 agencée latéralement à la zone de préhension 55 qui permet le passage des doigts de l'utilisateur pour saisir la zone de préhension 55 et soulever le couvercle 40.

La machine à café automatique 1 comporte un circuit de commande 70 (Fig. 1) pour la commande et la gestion des cycles de préparation des boissons infusées, notamment du café. Le circuit de commande 70 est relié au dispositif de sécurité par l'intermédiaire de l'interrupteur 16 pour commander ou interdire le fonctionnement du broyeur 10.

En fonctionnement, l'utilisateur qui veut enlever le couvercle 40 saisit la zone de préhension 55 en glissant le pouce dans la cavité 63 pour pincer la zone de préhension 55 entre le pouce et l'index. L'utilisateur soulève le couvercle 40 et la tige de sécurité 30. Ainsi, la paroi verticale 31 de la tige de sécurité 30 glisse sur la surface d'appui 22 jusqu'à se désengager complètement de cette surface d'appui 22. Le poussoir 20 va passer sous l'action du ressort 29 de la position activée vers la position désactivée, le bord inférieur 33 de la paroi verticale 31 glissant sur la surface inclinée 23 au fur et à mesure que le couvercle 40 s'écarte du cadre 60. Dans la position désactivée, le poussoir 20 libère le bouton 17 de l'interrupteur 16 qui est en position arrêt. Le circuit de commande 70 interdit alors la mise marche du broyeur 10. Pour remettre le couvercle 40, l'utilisateur introduit la tige de sécurité 30 dans l'orifice 61 pour accéder au logement 62, en tenant le couvercle 40 sensiblement à plat. Le bord inférieur 33 de la paroi verticale 31 glisse sur la surface inclinée 23 en faisant reculer le verrou 20 qui passe de la position désactivée à la position activée, puis la paroi verticale 31 glisse en face de la surface d'appui 22 pour immobiliser le poussoir 20 dans la position activée. Dans la position activée, le poussoir 20 appuie sur le bouton 17 de l'interrupteur 16 qui est en position marche. Le circuit de commande 70 permet alors la mise marche du broyeur 10 pour réaliser des boissons à base de café.

L'utilisateur peut également enlever le couvercle 40 en le faisant pivoter autour de l'axe Δ aligné avec le bord 41. Lors de la rotation du couvercle 40, la paroi verticale 31 glisse sur la surface d'appui 22 jusqu'à ce que le bord latéral 34 soit aligné avec le bord incliné 27. Le poussoir 20 passe alors de la position activée à la position désactivée. L'utilisateur peut alors glisser ses doigts sous le couvercle 40, vers l'intérieur du bac 50 à grains de café pour saisir le couvercle 40 en toute sécurité.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments, sans sortir pour autant du domaine de protection de l'invention dans la limite définie par les revendications. Dans une variante de réalisation, le poussoir est agencé de manière verticale.

## Revendications

1. Machine à café automatique (1) comportant un bac (50) à grains de café alimentant un broyeur (10), ledit bac (50) comportant une ouverture (51) supérieure recouverte par un couvercle (40) amovible, ladite machine à café (1) comportant un dispositif de sécurité (16, 20, 30) de présence du couvercle (40) sur l'ouverture (51) supérieure qui comprend une tige de sécurité (30) qui s'étend depuis un bord (41) du couvercle (40) et un interrupteur (16) muni d'un poussoir (20) mobile entre une position activée dans laquelle le couvercle (40) est présent sur le bac (50) et la tige de sécurité (30) agit sur le poussoir (20) et l'interrupteur (16) qui autorise le fonctionnement du broyeur (10), et une position désactivée dans laquelle le couvercle (40) est retiré du bac (50) et l'interrupteur (16) interdit le fonctionnement du broyeur (10), la tige de sécurité (30) comportant un organe d'appui (31) qui coopère avec une surface d'appui (22) du poussoir (20) dans la position activée, **caractérisée en ce que** la tige de sécurité (30) s'étend transversalement à un plan P dans lequel s'inscrit le couvercle (40) et **en ce que** le couvercle (40) est mobile sur le bac (50) en rotation autour d'un axe Δ tangent au bord (41) du couvercle (40) et passant par une zone de jonction (42) de la tige de sécurité (30), l'organe d'appui (31) de la tige de sécurité (30) étant dimensionné pour se désaccoupler de la surface d'appui (22) du poussoir (20) lorsque le couvercle (40) posé sur le bac (50) pivote autour de l'axe Δ d'une valeur angulaire supérieure à 20° et ainsi faire passer le poussoir (20) dans la position désactivée.

2. Machine à café automatique (1) selon la revendication 1, **caractérisée en ce que** le couvercle (40) et l'ouverture (51) présentent une forme rectangulaire, l'axe Δ s'étendant le long du bord (41) formé par un grand côté de la forme rectangulaire.

3. Machine à café automatique (1) selon l'une quelconque des revendications 1 à 2, **caractérisée en ce que** la tige de sécurité (30) s'étend perpendiculairement au couvercle (40), sur le bord (41) orienté vers l'utilisateur.

4. Machine à café automatique (1) selon l'une quelconque des revendications 1 à 3, **caractérisée en ce que** le poussoir (20) est mobile en translation, parallèlement à l'axe Δ.

5. Machine à café automatique (1) selon l'une quelconque des revendications 1 à 4, **caractérisée en ce qu'**elle comporte une paroi supérieure (8) au sein de laquelle est agencée l'ouverture (51) et **en ce que** l'axe Δ est horizontal.

6. Machine à café automatique (1) selon l'une quelconque des revendications 1 à 5, **caractérisée en ce que** l'organe d'appui est formé par une paroi verticale (31) de forme rectangulaire, agencée de manière perpendiculaire à l'axe Δ et **en ce que** la surface d'appui (22) présente une forme de trapèze.

7. Machine à café automatique (1) selon l'une quelconque des revendications 1 à 6, **caractérisée en ce que** le dispositif de sécurité (16, 20, 30) comporte un moyen de rappel (29) du poussoir (20) dans la position désactivée.

8. Machine à café automatique (1) selon l'une quelconque des revendications 1 à 7, **caractérisée en ce que** le couvercle (40) comporte une zone de préhension (55) agencée à proximité de la tige de sécurité (30).

9. Machine à café automatique (1) selon l'une quelconque des revendications 1 à 8, **caractérisée en ce que** le broyeur (10) comporte une meule fixe (12) et une meule mobile (11) en rotation, le bac (50) à grains de café comportant un conduit (54) d'accès aux meules fixe (12) et mobile (11) démuni d'obstacles.

10. Machine à café automatique (1) selon l'une quelconque des revendications 1 à 9, **caractérisée en ce qu'**elle comporte un système de commande (70) relié à l'interrupteur (16) pour autoriser ou interdire le fonctionnement du broyeur (10).

## Patentansprüche

1. Automatische Kaffeemaschine (1), die einen Kaffeebohnenbehälter (50) aufweist, der ein Mahlwerk (10) versorgt, wobei der Behälter (50) eine obere Öffnung (51) aufweist, die von einem abnehmbaren Deckel (40) bedeckt ist, wobei die Kaffeemaschine (1) eine Sicherheitsvorrichtung (16, 20, 30) für die Anwesenheit des Deckels (40) auf der oberen Öffnung (51) aufweist, die eine Sicherheitsstange (30), die sich von einem Rand (41) des Deckels (40) aus erstreckt, und einen Schalter (16) umfasst, der mit einem Drücker (20) versehen ist, der zwischen einer aktivierten Position, in welcher der Deckel (40) auf dem Behälter (50) anwesend ist und die Sicherheitsstange (30) auf den Drücker (20) und den Schalter (16) wirkt, der den Betrieb des Mahlwerks (10) ermöglicht, und eine deaktivierte Position beweglich ist, in welcher der Deckel (40) vom Behälter (50) entfernt ist und der Schalter (16) den Betrieb des Mahlwerks (10) unterbindet, wobei die Sicherheitsstange (30) ein Auflageorgan (31) aufweist, das in der aktivierten Position mit einer Auflagefläche (22) des Drückers (20) zusammenwirkt, **dadurch gekennzeichnet, dass** sich die Sicherheitsstange (30) quer zu einer Ebene P erstreckt, in welcher sich der Deckel (40) einfügt, und dass der Deckel (40) auf dem Behälter (50) drehbeweglich um eine Achse Δ ist, die den Rand (41) des Deckels (40) tangiert und durch eine Verbindungszone (42) der Sicherheitsstange (30) verläuft, wobei das Auflageorgan (31) der Sicherheitsstange (30) so bemessen ist, dass es sich von der Auflagefläche (22) des Drückers (20) entkoppelt, wenn der auf den Behälter (50) aufgelegte Deckel (40) um die Achse Δ um einen Winkelwert größer als 20° schwenkt, und somit den Drücker (20) in die deaktivierte Position übergehen lässt.

2. Automatische Kaffeemaschine (1) nach Anspruch 1, **dadurch gekennzeichnet, dass** der Deckel (40) und die Öffnung (51) eine rechteckige Form aufweisen, wobei sich die Achse Δ entlang des Randes (41) erstreckt, der durch eine Längsseite der rechteckigen Form gebildet wird.

3. Automatische Kaffeemaschine (1) nach einem der Ansprüche 1 bis 2, **dadurch gekennzeichnet, dass** sich die Sicherheitsstange (30) senkrecht zum Deckel (40) auf dem zum Benutzer gerichteten Rand (41) erstreckt.

4. Automatische Kaffeemaschine (1) nach einem der Ansprüche 1 bis 3, **dadurch gekennzeichnet, dass** der Drücker (20) parallel zur Achse Δ translatorisch beweglich ist.

5. Automatische Kaffeemaschine (1) nach einem der Ansprüche 1 bis 4, **dadurch gekennzeichnet, dass** sie eine obere Wand (8) aufweist, innerhalb derer die Öffnung (51) angeordnet ist, und dass die Achse Δ horizontal verläuft.

6. Automatische Kaffeemaschine (1) nach einem der Ansprüche 1 bis 5, **dadurch gekennzeichnet, dass** das Auflageorgan durch eine senkrecht zur Achse Δ angeordnete, rechteckig geformte vertikale Wand (31) gebildet ist, und dass die Auflagefläche (22) eine Trapezform aufweist.

7. Automatische Kaffeemaschine (1) nach einem der Ansprüche 1 bis 6, **dadurch gekennzeichnet, dass** die Sicherheitsvorrichtung (16, 20, 30) ein Rückstellmittel (29) des Drückers (20) in die deaktivierte Position aufweist.

8. Automatische Kaffeemaschine (1) nach einem der Ansprüche 1 bis 7, **dadurch gekennzeichnet, dass** der Deckel (40) eine Greifzone (55) aufweist, die in der Nähe der Sicherheitsstange (30) angeordnet ist.

9. Automatische Kaffeemaschine (1) nach einem der Ansprüche 1 bis 8, **dadurch gekennzeichnet, dass** das Mahlwerk (10) einen festen Mahlstein (12) und einen drehbeweglichen Mahlstein (11) umfasst, wobei der Kaffeebohnenbehälter (50) eine Zugangsleitung (54) zu dem festen (12) und dem beweglichen (11) Mahlstein aufweist, die frei von Hindernissen sind.

10. Automatische Kaffeemaschine (1) nach einem der Ansprüche 1 bis 9, **dadurch gekennzeichnet, dass** sie ein Steuersystem (70) aufweist, das mit dem Schalter (16) verbunden ist, um den Betrieb des Mahlwerks (10) zu autorisieren oder zu unterbinden.

## Claims

1. Automatic coffee machine (1) comprising a coffee bean tray (50) supplying a crusher (10), said tray (50) comprising an upper opening (51) covered by a removable lid (40), said coffee machine (1) comprising a safety device (16, 20, 30) of presence of the lid (40) on the upper opening (51) which comprises a safety rod (30) which extends from an edge (41) of the lid (40) and a switch (16) equipped with a push-button (20) which is movable between an activated position, wherein the lid (40) is present on the tray (50) and the safety rod (30) acts on the push-button (20) and the switch (16) which enables the operation of the crusher (10), and a deactivated position, wherein the lid (40) is removed from the tray (50) and the switch (16) prohibits the operation of the crusher (10), the safety rod (30) comprising a support member (31) which engages with a support surface (22) of the push-button (20) in the activated position, **characterised in that** the safety rod (30) extends transversally to a plane P wherein the lid (40) falls, and **in that** the cover (40) is rotatably movable on the tray (50) about an axis Δ tangent to the edge (41) of the lid (40) and passing through a junction zone (42) of the safety rod (30), the support member (31) of the safety rod (30) being sized to be uncoupled from the support surface (22) of the push-button (20) when the lid (40) placed on the tray (50) pivots about the axis Δ of an angular value greater than 20° and thus make the push-button (20) pass into the deactivated position.

2. Automatic coffee machine (1) according to claim 1, **characterised in that** the lid (40) and the opening (51) having a rectangular shape, the axis Δ extending along the edge (41) formed by a large side of the rectangular shape.

3. Automatic coffee machine (1) according to any one of claims 1 to 2, **characterised in that** the safety rod (30) extends perpendicularly to the lid (40), on the edge (41) oriented towards the user.

4. Automatic coffee machine (1) according to any one of claims 1 to 3, **characterised in that** the push-button (20) is movable in translation, parallel to the axis Δ.

5. Automatic coffee machine (1) according to any one of claims 1 to 4, **characterised in that** it comprises an upper wall (8) within which the opening (51) arranged, and **in that** the axis Δ is horizontal.

6. Automatic coffee machine (1) according to any one of claims 1 to 5, **characterised in that** the support member is formed by a rectangularly-shaped vertical wall (31), arranged perpendicularly to the axis Δand **in that** the support surface (22) has a trapezium shape.

7. Automatic coffee machine (1) according to any one of claims 1 to 6, **characterised in that** the safety device (16, 20, 30) comprises a means for returning (29) the push-button (20) into the deactivated position.

8. Automatic coffee machine (1) according to any one of claims 1 to 7, **characterised in that** the lid (40) comprises a gripping zone (55) arranged in the proximity of the safety rod (30).

9. Automatic coffee machine (1) according to any one of claims 1 to 8, **characterised in that** the crusher (10) comprising a fixed grinder (12) and a rotatably movable grinder (11), the coffee bean tray (50) comprising a conduit (54) for accessing the fixed (12) and movable (11) grinders with no obstacles.

10. Automatic coffee machine (1) according to any one of claims 1 to 9, **characterised in that** it comprises a control system (70) connected to the switch (16) to enable or prohibit the operation of the crusher (10).
